Europäisches Patentamt

(19) European Patent Office

Office européen des brevets

(11) Numéro de publication: **0 275 803**
**B1**

(12) **FASCICULE DE BREVET EUROPEEN**

(45) Date de publication du fascicule du brevet:
**07.11.90**

(21) Numéro de dépôt: **87420340.9**

(22) Date de dépôt: **14.12.87**

(51) Int. Cl.⁵: **B23K 35/28,** B23K 1/20,
B23K 20/22, C22F 1/04

(54) Méthode de brasage des alliages d'aluminium sans métal d'apport.

(30) Priorité: **16.12.86 FR 8618454**

(43) Date de publication de la demande:
**27.07.88 Bulletin 88/30**

(45) Mention de la délivrance du brevet:
**07.11.90 Bulletin 90/45**

(84) Etats contractants désignés:
**DE GB**

(56) Documents cités:
**GB-A- 788 017**
**US-A- 2 658 845**
**US-A- 2 969 590**
**US-A- 4 214 925**

(73) Titulaire: **PECHINEY RHENALU, 6, place de l'Iris Tour Manhattan LA DEFENSE 2, F-92400 COURBEVOIE(FR)**

(72) Inventeur: **Raynaud, Guy-Michel, 4 bis rue Paviot, F-38120 Saint Egrève(FR)**
Inventeur: **Réalis, Louis, Les Jolis Chirens, F-38850 Charavines(FR)**
Inventeur: **Constant, Didier, 12, avenue de l'Europe Immeuble Vendémiaire, F-38120 Saint Egrève(FR)**

(74) Mandataire: **Séraphin, Léon et al, PECHINEY 28, rue de Bonnel, F-69433 Lyon Cedex 3(FR)**

ACTORUM AG

## Description

L'invention se rapporte à une méthode de brasage, sans métal d'apport de deux composants dont l'un au moins est en alliage d'Al.

Il est connu que le brasage est réalisé par interposition entre les deux composants à assembler d'un métal d'apport dont la température de fusion est inférieure à celle des deux composants considérés. Par exemple en ce qui concerne les alliages d'Al, les alliages brasables ainsi que les alliages de brasure généralement utilisés sont décrits dans Metals Handbook, 9e édition, 1983, page 1023.

Cependant l'ajout du métal d'apport de la brasure constitue une opération supplémentaire et coûteuse, dont il serait important, du point de vue économique, de se passer. De plus, lors de la réalisation d'assemblages brasés de haute précision géométrique comme, par exemple, dans la réalisation de guides d'ondes, l'épaisseur de la brasure doit être contrôlée avec grande précision.

En effet, l'alliage d'apport est généralement apporté: soit sous forme indépendante, (ruban, fils, poudres, etc...) entre les 2 surfaces à braser avec le jeu nécessaire, soit sous forme associée au métal à assembler, c'est-à-dire liée métallurgiquement à l'un des composants, sous forme de placage obtenu par colaminage par exemple. Dans les deux cas, le métal d'apport représente une épaisseur relativement importante qui limite la précision géométrique de l'assemblage obtenu.

Le problème qui se pose à l'homme de l'art, est donc d'une part l'obtention d'un joint brasé entre deux composants, sans interposition d'un alliage d'apport et d'autre part, l'obtention d'une liaison par brasage entre deux composants, dont l'un au moins est en alliage d'Al réputé non brasable.

Le procédé selon l'invention consiste à porter, avant le cycle de brasage proprement dit, au moins une pièce en alliage d'Al considéré dans un domaine de températures comprises entre la température du solvus $T_v$ de l'alliage et les 2/5 de la température de fusion (solidus) $T_s$ de l'alliage, exprimé en Kelvin, pendant une durée minimale.

Cette durée minimale est égale ou supérieure au temps le plus court correspondant aux nez des courbes TTP de l'alliage considéré, dans un diagramme température - log. du temps; la propriété P est soit les caractéristiques mécaniques de traction, soit la sensibilité à la corrosion. Ces courbes TTP sont soit connues par la littérature technique, soit déterminables expérimentalement. La durée est de préférence tenue égale ou supérieure à la plus faible des durées déterminée par les 2 courbes TTP elles-mêmes, comme définies ci-dessus.

Le traitement n'est pas obligatoirement isotherme - En pratique on chauffe la pièce à une température supérieure à 2/5 $T_s$ et on la laisse refroidir à une vitesse telle que la pièce soit entre $T_v$ et 2/5 $T_s$ pendant une durée supérieure au minimum requis.

Pour des températures supérieures au maximum revendiqué ou des temps inférieurs au minimum revendiqué, il a été constaté que le brasage est soit impossible à obtenir soit aléatoire. Pour les températures inférieures au minimum revendiqué, les temps de traitement deviennent excessifs, ce qui ôte au procédé tout intérêt pratique.

Ce traitement peut être effectué à un stade quelconque de la gamme de fabrication qui précède l'opération de brasage elle-même, pourvu que la température ne dépasse pas la température maximale revendiquée avant brasage. Cependant, il est préférable d'effectuer ce traitement immédiatement après un traitement de mise en solution, pour obtenir un état métallurgique nettement sursaturé. Ce traitement peut également être effectué préférentiellement immédiatement avant l'opération de brasage, par exemple, au cours du chauffage à la température de brasage. Ce traitement peut être pratiqué dans une atmosphère quelconque : air, gaz inerte ou vide. Cependant, dans ce dernier milieu, il a été constaté qu'avec les alliages des séries 5000 et 7000 suivant la désignation de l'Aluminium Association les résultats de brasage sont relativement moins bons.

Un alliage d'Al ainsi traité, soit de façon isotherme, soit de manière quelconque dans le domaine revendiqué est apte au brasage sans métal d'apport sur un autre composant, en portant l'assemblage dans un domaine de températures comprises entre la température de fusion $T_E$ de l'eutectique le plus fusible correspondant au diagramme d'état des constituants de cet alliage et celle du solidus de l'alliage.

L'accostage des composants à assembler peut être réalisé avec ou sans l'aide d'une pression ou d'un effort sur le joint à réaliser; une bonne jonction géométrique des surfaces à assembler est nécessaire. Après brasage, l'assemblage peut subir un traitement de mise en solution métallurgique.

Le procédé de l'invention permet lors du brasage, d'obtenir des joints de bonne qualité avec une dissolution réduite des matériaux à assembler, du fait de la faible quantité de liquide mise en jeu lors du cycle thermique, et qui n'apparaît qu'au niveau de la surface de jonction des pièces à assembler.

Les assemblages obtenus sont métallurgiquement sains, c'est-à-dire exempts de brûlures, aussi bien dans les matériaux de base qu'au voisinage de la jonction. Lorsque les deux composants sont des alliages d'Al, la mise en solution ultérieure conduit à une structure parfaitement homogène, dans laquelle la zône de jonction n'est plus visible en microscopie.

L'invention sera mieux comprise à l'aide des exemples suivants, illustrés par les figures 1 à 5.

La figure 1 représente l'éprouvette utilisé, pour l'alliage Al-1%Si.

La figure 2 représente la zone de brasure des 2 éléments de l'éprouvette ci-dessus selon la coupe BB de la figure 1.

La figure 3 représente une coupe micrographique transversale sur la liaison 6060/6060 (selon les désignations de l'Aluminium Association).

La figure 4 représente une image électronique de la zone de liaison 2011/2011 (selon les désignations de l'Aluminium Association).

La figure 5 représente une coupe micrographique de la zone de liaison 6060/acier inoxydable.

## EXEMPLE 1

Brasage d'Al-1%Si, sans métal d'apport $T_s=600°C$ $T_e=577°C$ $T_v=515°$

Des éprouvettes de traction en alliage d'Al à 1% en poids de Si de 4 mm d'épaisseur, 10 mm de largeur, et de 79 mm de longueur utiles ont été découpées dans des largets.

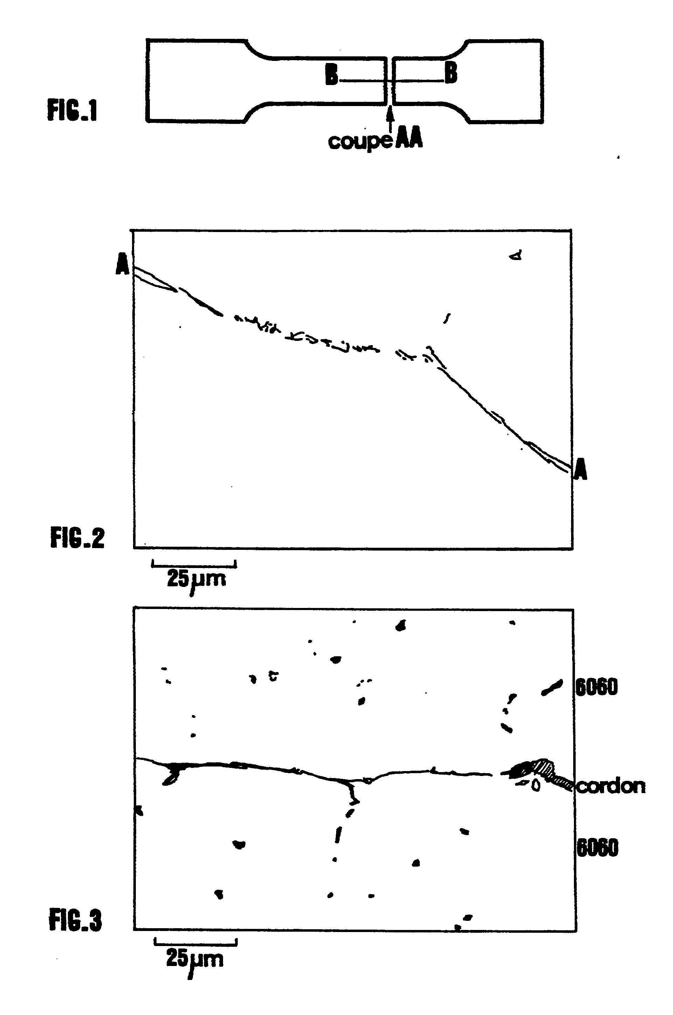

Les deux surfaces à joindre ont été obtenues par section selon AA (figure 1) dans le sens travers des éprouvettes. Les deux demi-éprouvettes ont ensuite été mises en solution 3 heures à 530°C, puis refroidies lentement à 20°C/heure, jusqu'à la température ambiante. C'est le refroidissement lent entre 515°C $(T_v)$ et 76°C $(2/5 T_s=349K)$, d'une durée de 22 heures qui a constitué le traitement de l'invention.

Les deux demi-éprouvettes ont alors été mises en contact par leur section droite sous une pression de 80 kPa.

L'ensemble a ensuite été brasé en étant porté à 595°C pendant 5 min. dans un bain de sel de brasage pour aluminium et refroidi à l'air calme.

La figure 2 représente une micrographie de la surface de joint après brasure; on constate qu'il y a bien eu fusion locale des deux surfaces en contact et formation de l'eutectique AlSi à la jonction de deux demi-éprouvettes. Après mise en solution de 3 h à 530°C et trempe, l'éprouvette de traction ainsi reconstituée présente les mêmes caractéristiques mécaniques de traction que celles du métal de base Al-1%Si, la zone de jonction n'étant plus visible en microscopie.

On peut constater que dans le corps des 1/2 éprouvettes, aucune fusion locale n'est intervenue.

## EXEMPLE 2

Brasage du 6060 sans métal d'apport $T_s = 625°C$ $T_e = 595°C$ $T_v = 520°C$.

Deux éléments en alliage 6060 (selon la désignation de l'Aluminium Association) ont été portés à 530°C pendant 1 h et refroidis lentement à 10°C/h jusqu'à température ambiante. L'alliage est ainsi resté 43 heures entre $T_v =520°C$ et 86° $(2/5 T_s = 359 k)$ pour être soumis au traitement de l'invention. Ceux-ci ont été mis en contact sous une pression de 45 kPa.

L'ensemble a ensuite été brasé en étant porté à 603°C pendant 5 min. en bain de sel de brasage pour l'aluminium et refroidi à l'air calme. Après mise en solution de 1 h à 530°C, trempe et revenu de 8 h à 175°C, l'assemblage présente une dureté homogène de 70 Vickers, dans la zone de brasure ou dans l'alliage de base.

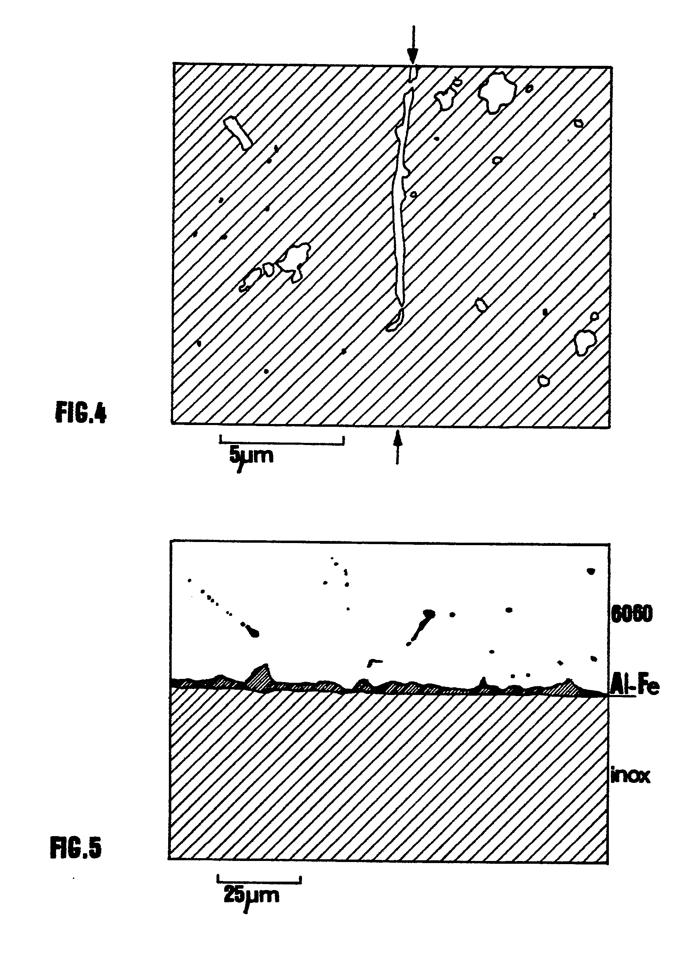

La figure 3 représente une coupe micrographique de la liaison; celle-ci est marquée par une fine précipitation de composés Al-Fe-Si.

## EXEMPLE 3

Brasage de 2011 sans métal d'apport $T_s = 560°C$ $T_e = 548°C$ $T_v = 520°C$.

Deux éléments en alliage 2011 selon la désignation de l'Aluminium Association, de composition suivante (en poids %) : Cu: 5,4 - Fe: 0,29 - Si : 0,07 - Pb: 0,60 - Bi: 0,60 ont été portés 1 h à 530°C et refroidis lentement à 10°C/h jusqu'à la température ambiante. Le refroidissement entre 520°C $(T_v)$ et 61° $(2/5T_s=334K)$ qui a duré 46 heures a constitué le traitement de l'invention.

Les deux éléments ont été mis en contact sous une pression de 45 kPa. L'ensemble a ensuite été porté à 553°C pendant 5 min. en bain de sel de brasage de l'aluminium puis refroidi à l'air calme.

Après mise en solution de 1 h à 530°C, trempe et revenu de 8 h à 160°C, la zone de liaison présente la même dureté que l'alliage de base soit 110 Vickers.

La figure 4 représente une image électronique de la zone de liaison; la phase présente à l'interface est $Al_2 Cu$.

## EXEMPLE 4

Brasage sans métal d'apport d'un alliage 6060 sur un acier inoxydable ferritique à 17%Cr avec du molybdène.

Un élément en alliage 6060 de composition (% en poids): Mg: 0,45 - Si: 0,40 - Fe: 0,20reste Al a été mis en solution pendant 1 h à530°C et refroidi lentement à 10°C/h jusqu'à la température ambiante. Il est ainsi resté 43 heures entre 520°C $(T_v)$ et 86°C $(2/5T_s=359 K)$.

Il a été mis en contact avec l'élement en acier inoxydable sous une pression de 500 kPa. L'assemblage a ensuite été porté 5 min. à 603°C en bain de sel de brasage refroidi à l'air calme. Après mise en solution de 1 h à 530°C, trempe, et revenu 8 h à 170°C, la liaison obtenue est reportée à la figure 5. Le constituant présent dans le joint est un composé (Al-Fe).

## EXEMPLE 5

Brasage de l'aluminium 2017 sans alliage d'apport $T_s=530°C$ $T_e=513°C$ $T_v=500°C$.

Des plaquettes ont été mises en solution pendant 1 heure à 510°C, puis refroidies lentement à raison de 10°C/h jusqu'à la température ambiante. Elles sont ainsi restées 45 heures entre 500°C $(T_v)$ et 48°C $(2/5T_s=321K)$. Le brasage a été réalisé à 520°C et a donné d'excellents résultats.

Les assemblages obtenus selon l'invention et comportant au moins un alliage à base d'Al sont facilement et complètement remis en solution contrairement au brasage classique. Dans le cas du brasage des 2 alliages à base d'Al identiques, les propriétés mécaniques ou de résistance à la corrosion sont parfaitement homogènes dans l'alliage de base et au niveau de la jonction.

## Revendications

1. Méthode de brasage sans métal d'apport de deux composants dont l'un au moins est en alliage d'Al, caractérisé en ce que:

a) avant brasage au moins l'un des composants en alliage d'Al est maintenu dans un domaine de températures comprises entre la température du solvus $T_v$ de cet alliage et les 2/5 de sa température de fusion (solidus $T_s$) exprimée en Kelvin et pour une durée supérieure ou égale à la durée la plus courte correspondant au nez d'une des courbes TTP de l'alliage considéré, P étant soit les caractéristiques mécaniques, soit la sensibilité à la corrosion et en ce que:

b) lors du brasage les composants assemblés sont portés dans un domaine de températures comprises entre la température de l'eutectique le plus fusible correspondant au diagramme d'état des constituants de l'alliage d'Al et celle du solidus de cet alliage.

2. Méthode selon la revendication 1, caractérisée en ce que la durée du traitement a) est supérieure ou égale à la plus faible des durées définies par les courbes TTP elles-mêmes.

3. Méthode selon l'une des revendications 1 ou 2 où le traitement a) est isotherme

4. Méthode selon l'une des revendications 1 ou 2, où le composant en alliage d'Al est portée à une température supérieure à 2/5 $T_s$ puis refroidie à une vitesse telle que la pièce demeure dans la zone de température $T_v$-2/5$T_s$ pendant une durée au moins égale à la durée minimale requise selon a).

5. Méthode selon la revendication 4, où le composant en alliage d'Al est mis en solution métallurgique avant le traitement thermique a) ayant lieu pendant le refroidissement contrôlé effectué à partir de la température de mise en solution de l'alliage.

6. Méthode suivant l'une des revendications 1 à 5 caractérisé en ce que l'opération de brasage est suivie d'une mise en solution métallurgique.

7. Assemblage obtenu selon l'une des revendications 1 à 5 caractérisé en ce que celui-ci est métallurgiquement sain.

8. Assemblage obtenu selon la revendication 6 caractérisé en ce que lorsque les 2 composants sont des alliages d'Al la structure est parfaitement homogène.

## Patentansprüche

1. Verfahren zum Hartlöten zweier Bauteile, von denen wenigstens eines aus Al-Legierung ist, ohne Zusatzmetall, dadurch gekennzeichnet, dass :

a) vor dem Hartlöten wenigstens das eine der Bauteile aus Al-Legierung in einem Bereich von Temperaturen, die zwischen der Temperatur der Homogenisierungsuntergrenze ($T_v$) dieser Legierung und den 2/5 ihrer in Kelvin ausgedrückten Schmelztemperatur (Solidus $T_s$) liegen, und für eine Dauer über oder gleich der kürzesten Dauer gehalten wird, die der Nase einer der TTP-Kurven der betrachteten Legierung entspricht, wobei P die mechanischen Eigenschaften oder die Korrosionempfindlichkeit bedeutet, und dass :

b) beim Hartlöten die montierten Bauteile in einen Bereich von Temperaturen gebracht werden, die zwischen der Temperatur des schmelzbarsten Eutektikums entsprechend dem Zustandsdiagramm der Bestandteile der Al-Legierung und der des Solidus dieser Legierung liegen.

2. Verfahren nach dem Anspruch 1, dadurch gekennzeichnet, dass die Dauer der Behandlung a) über oder gleich der niedrigsten der durch die TTP-Kurven selbst definierten Dauern ist.

3. Verfahren nach einem der Ansprüche 1 oder 2, wobei die Behandlung a) isotherm ist.

4. Verfahren nach einem der Ansprüche 1 oder 2, wobei das Bauteil aus Al-Legierung auf eine Temperatur über 2/5 $T_s$ gebracht und dann mit einer solchen Geschwindigkeit abgekühlt wird, dass das Bauteil in der Temperaturzone $T_v$ - 2/5 $T_s$ während einer Dauer bleibt, die wenigstens gleich der gemäss a) erforderlichen Mindestdauer ist.

5. Verfahren nach dem Anspruch 4, wobei das Bauteil aus Al-Legierung in metallurgische Lösung gebracht wird, bevor die Wärmebehandlung a) während der gesteuerten, von der Lösungstemperatur der Legierung aus durchgeführten Abkühlung stattfindet.

6. Verfahren nach einem der Ansprüche 1 bis 5, dadurch gekennzeichnet, dass auf den Hartlötvorgang ein Bringen in metallurgische Lösung folgt.

7. Nach einem der Ansprüche 1 bis 5 erhaltene Verbundeinheit, dadurch gekennzeichnet, dass sie metallurgisch gesund ist.

8. Nach dem Anspruch 6 erhaltene Verbundeinheit, dadurch gekennzeichnet, dass das Gefüge, wenn die 2 Bauteile Al-Legierungen sind, völlig homogen ist.

## Claims

1. Method of brazing without filler metal of 2 components of which at least one is af Al alloy, characterized in that:

a) before brazing at least one of the components of Al alloy is kept in a region of temperatures included between the temperature of solvus $T_0$ of this alloy and 2/5 of its temperature of fusion (solidus) $T_s$ expressed in Kelvin and for a duration of greater than or equal to the shortest corresponding to the cusp of one of the TTP curves of the alloy considered, P being either the mechanical characteristics, or the sensitivity to corrosion and in that:

b) at the time of brazing the assembled components are brought into a region of temperatures included between the temperature of the most fusible eutectic corresponding to the equilibrium diagram of the constituents of the Al alloy and that of solidus of this alloy.

2. Method according to claim 1, characterized in that the duration of treatment (a) is greater than or equal to the smaller of the durations defined by the TTP curves themselves.

3. Method according to one of claims 1 or 2 where the treatment (a) is isothermal.

4. Method according to one of the claims 1 or 2, where the Al alloy component is brought to a temperature greater than 2/5 $T_s$, then cooled down again at a speed such that the piece remains in the zone of temperature $T_v$-2/5 $T_s$ for a period at least equal to the minimum duration required according to (a).

5. Method according to claim 4, where the Al alloy component is solution annealed before the thermal treatment (a) which takes place during the controlled cooling carried out from solution anneal temperature of the alloy.

6. Method following one of claims 1–5, characterized in that the operation of brazing is followed by placing the article in metallurgical solution.

7. Assemblage obtained according to one of claims 1–5, characterized in that said assemblage is metallurgically sound.

8. Assemblage obtained according to claim 6, characterized in that when the two components are alloys of Al the structure is perfectly homogeneous.

FIC.1

coupeAA

FIC.2

25μm

6060

cordon

6060

FIC.3

25μm

FIG.4

5μm

FIG.5

6060

Al-Fe

inox

25μm